# EUROPÄISCHE PATENTANMELDUNG

(11) **EP 2 706 376 A1**
(43) Veröffentlichungstag der Anmeldung: **12.03.2014**
(21) Anmeldenummer: 12183598.7
(22) Anmeldetag: 07.09.2012
(51) Int. Cl.: G01S 17/66

(54) **Lasertracker mit hybridem Abbildungsverfahren zur Erweiterung der Messreichweite**

(71) Anmelder: Leica Geosystems AG, 9435 Heerbrugg (CH)
(72) Erfinder: Böckem, Burkhard, CH-5200 Brugg (CH)
(74) Vertreter: Gyaja, Christoph Benjamin

(57) **Zusammenfassung**

Die Erfindung betrifft einen Lasertracker zur Positions- und/oder Orientierungsbestimmung eines Messhilfsobjekts mit einer eine Stehachse definierenden Basis, einer schwenkbaren Stütze und einer drehbaren Schwenkeinheit mit zumindest zwei Optikbaugruppen und einer Bilderfassungseinheit, wobei die Optikbaugruppen entlang einer optischen Achse der Schwenkeinheit verschiebbar sind und durch eine Positionierung der Optikbaugruppen ein Vergrösserungsfaktor definiert ist. Ferner verfügt der Tracker über eine Strahlquelle zur Emission eines Laserstrahls, eine Entfernungsmesseinheit, eine Winkelmessfunktionalität und über eine Steuerungs- und Verarbeitungseinheit mit einer Objektabbildungsfunktionalität, bei deren Ausführung ein Positionieren der Optikbaugruppen in Abhängigkeit von einer ausgelösten Messung zum Messhilfsobjekt so erfolgt, dass eine Abbildung für das Messhilfsobjekt mit einem bestimmten Bildmassstab auf der Bilderfassungseinheit bereitgestellt wird. Durch die Objektabbildungsfunktionalität ist zumindest ein Normal-Distanzbereich und ein Fern-Distanzbereich für eine Distanz zum Messhilfsobjekt definiert und bei Ausführung der Objektabbildungsfunktionalität wird gesteuert durch die Steuerungs- und Verarbeitungseinheit der Vergrösserungsfaktor in Abhängigkeit von der bestimmten Distanz zum Messhilfsobjekt derart eingestellt wird, dass für jede Distanz innerhalb des Normal-Distanzbereichs ein im Wesentlichen konstanter Normal-Bildmassstab und für jede Distanz innerhalb des Fern-Distanzbereichs ein in Abhängigkeit von der jeweiligen Distanz variabler Fern-Bildmassstab bereitgestellt wird.

## Beschreibung

Die Erfindung betrifft einen Lasertracker zur Positions- und/oder Ausrichtungsbestimmung eines Objekts nach dem Oberbegriff des Anspruchs 1, ein Objekterfassungsverfahren zum definierten scharfen Bilderfassen des Objekts für und mit einem Lasertracker nach Anspruch 11 und ein Computerprogrammprodukt nach Anspruch 15.

Messgeräte, die für eine fortlaufende Verfolgung eines Zielpunkts und eine koordinative Positionsbestimmung dieses Punkts ausgebildet sind, können allgemein, insbesondere im Zusammenhang mit industrieller Vermessung, unter dem Begriff Lasertracker zusammengefasst werden. Ein Zielpunkt kann dabei durch eine retro-reflektierende Einheit (z.B. Würfelprisma) repräsentiert sein, die mit einem optischen Messstrahl der Messvorrichtung, insbesondere einem Laserstrahl, angezielt wird. Der Laserstrahl wird parallel zurück zum Messgerät reflektiert, wobei der reflektierte Strahl mit einer Erfassungseinheit der Vorrichtung erfasst wird. Hierbei wird eine Emissions- bzw. Empfangsrichtung des Strahls, beispielsweise mittels Sensoren zur Winkelmessung, die einem Ablenkspiegel oder einer Anzieleinheit des Systems zugeordnet sind, ermittelt. Zudem wird mit dem Erfassen des Strahls eine Distanz von dem Messgerät zum Zielpunkt, z.B. mittels Laufzeit- oder Phasendifferenzmessung oder mittels des Fizeau-Prinzips, ermittelt.

In modernen Trackersystemen wird zudem - zunehmend standardisiert - auf einem Sensor eine Ablage des empfangenen Messlaserstrahls von einem so genannten Servokontrollpunkt ermittelt. Mittels dieser messbaren Ablage kann eine Positionsdifferenz zwischen dem Zentrum eines Retroreflektors und dem Auftreffpunkt des Laserstrahls auf dem Reflektor bestimmt und die Ausrichtung des Laserstrahls in Abhängigkeit dieser Abweichung derart korrigiert bzw. nachgeführt werden, dass die Ablage auf dem Sensor verringert wird, insbesondere "Null" ist, und damit der Strahl in Richtung des Reflektorzentrums ausgerichtet ist. Durch das Nachführen der Laserstrahlausrichtung kann eine fortlaufende Zielverfolgung (Tracking) des Zielpunkts erfolgen und die Entfernung und Position des Zielpunkts fortlaufend relativ zum Vermessungsgerät bestimmt werden. Das Nachführen kann dabei mittels einer Ausrichtungsänderung des motorisiert bewegbaren, zur Ablenkung des Laserstrahls vorgesehenen Ablenkspiegels und/oder durch ein Schwenken der Anzieleinheit, die die strahlführende Laseroptik aufweist, realisiert werden.

Der beschriebenen Zielverfolgung muss ein Ankoppeln des Laserstrahls an den Reflektor vorausgehen. Hierzu kann am Tracker zusätzlich eine Erfassungseinheit mit einem positionssensitiven Sensor und mit einem verhältnismässig grossen Sichtfeld angeordnet sein. Zudem sind in gattungsgemässe Geräte zusätzliche Beleuchtungsmittel integriert, mit welchen das Ziel bzw. der Reflektor, insbesondere mit einer definierten, sich von der Wellenlänge der Distanzmessmittel unterscheidenden Wellenlänge, beleuchtet wird. Der Sensor kann in diesem Zusammenhang sensitiv auf einen Bereich um diese bestimmte Wellenlänge ausgebildet sein, um beispielsweise Fremdlichteinflüsse zu reduzieren oder gänzlich zu verhindern. Mittels der Beleuchtungsmittel kann das Ziel beleuchtet und mit der Kamera ein Bild des Ziels mit beleuchtetem Reflektor erfasst werden. Durch die Abbildung des spezifischen (wellenlängenspezifischen) Reflexes auf dem Sensor können die Reflexposition im Bild aufgelöst und damit ein Winkel relativ zur Erfassungsrichtung der Kamera und eine Richtung zum Ziel bzw. Reflektor bestimmt werden. Eine Ausführungsform eines Lasertrackers mit einer derartigen Zielsucheinheit ist beispielsweise aus der WO 2010/148525 Al bekannt. In Abhängigkeit der so ableitbaren Richtungsinformation kann die Ausrichtung des Messlaserstrahls derart verändert werden, dass ein Abstand zwischen dem Laserstrahl und dem Reflektor, an welchen der Laserstrahl angekoppelt werden soll, verkleinert wird.

Zur Entfernungsmessung weisen Lasertracker des Standes der Technik zumindest einen Distanzmesser auf, wobei dieser z.B. als Interferometer ausgebildet sein kann. Da solche Entfernungsmesseinheiten nur relative Distanzänderungen messen können, werden in heutigen Lasertrackern zusätzlich zu Interferometern so genannte Absolutdistanzmesser verbaut. Beispielsweise ist eine derartige Kombination von Messmitteln zur Entfernungsbestimmung durch das Produkt AT901 der Leica Geosystems AG bekannt. Ferner ist eine Kombination eines Absolutdistanzmessers und eines Interferometers zur Entfernungsbestimmung mit einem HeNe-Laser beispielsweise aus der WO 2007/079600 A1 bekannt.

Lasertracker nach dem Stand der Technik können zusätzlich mit einer optischen Bilderfassungseinheit mit einem zweidimensionalen, lichtempfindlichen Array, z.B. einer CCD- oder CID-Kamera oder einer auf einem CMOS-Array basierenden Kamera, oder mit einem Pixelarraysensor und mit einer Bildverarbeitungseinheit ausgeführt sein. Der Lasertracker und die Kamera können dabei insbesondere derart aufeinander montiert sein, dass ihre Positionen relativ zueinander nicht veränderbar sind. Die Kamera ist beispielsweise zusammen mit dem Lasertracker um dessen im Wesentlichen senkrechte Achse drehbar, jedoch unabhängig vom Lasertracker auf und ab schwenkbar und somit insbesondere von der Optik des Laserstrahls getrennt angeordnet. Weiters kann die Kamera - z.B. in Abhängigkeit der jeweiligen Anwendung - nur um eine Achse schwenkbar ausgeführt sein. In alternativen Ausführungen kann die Kamera in integrierter Bauweise mit der Laseroptik zusammen in einem gemeinsamen Gehäuse verbaut sein.

Mit dem Erfassen und Auswerten eines Bildes - mittels Bilderfassungs- und Bildverarbeitungseinheit - eines so genannten Messhilfsinstruments bzw. Messhilfsobjekts mit Markierungen, deren relative Lagen zueinander bekannt sind, kann auf eine Orientierung des Instruments und eines an dem Messhilfsinstrument angeordneten Objekts (z.B. eine Sonde) im Raum geschlossen werden. Zusammen mit der bestimmten räumlichen Position des Zielpunkts kann ferner die Position und Orientierung des Objekts im Raum absolut und/oder relativ zum Lasertracker präzise bestimmt werden (6DoF-Bestimmung: Bestimmung von sechs Freiheitsgraden).

Derartige Messhilfsinstrumente können durch so genannte Tastwerkzeuge, die mit ihrem Kontaktpunkt auf einem Punkt des Zielobjektes positioniert werden, verkörpert sein. Das Tastwerkzeug weist Markierungen, z.B. Lichtpunkte, und einen Reflektor auf, der einen Zielpunkt am Tastwerkzeug repräsentiert und mit dem Laserstrahl des Trackers anzielbar ist, wobei die Positionen der Markierungen und des Reflektors relativ zum Kontaktpunkt des Tastwerkzeuges präzise bekannt sind. Das Messhilfsinstrument kann in dem Fachmann bekannter Weise auch ein beispielsweise von Hand gehaltener, zur Distanzmessung ausgerüsteter Scanner für berührungslose Oberflächenvermessungen sein, wobei Richtung und Position des für die Distanzmessung verwendeten Scanner-Messstrahles relativ zu den Lichtpunkten und Reflektoren, die auf dem Scanner angeordnet sind, genau bekannt sind. Ein derartiger Scanner ist beispielsweise in der EP 0 553 266 beschrieben.

Für eine zuverlässige Bestimmung der Orientierung eines Objekts mit einem Lasertracker ist eine scharfe (fokussierte) Abbildung und vorzugsweise ein bekannter Massstab für die Abbildung des Objekts z.B. auf einer Kamera vorteilhaft. Ein daraus erfassbares Bild kann dadurch bei einem bekannten und für eine Auswertung optimierten Grössenverhältnis schnell mittels Bildverarbeitung ausgewertet werden.

Den hierfür einschlägigen Stand der Technik stellen bildverarbeitende Systeme typischerweise mit Fixfokusobjektiven dar. Im Bereich der Koordinatenmessmaschinen (CMM) kommen mitunter Zoomobjektive für eingeschränkte Objektdistanzen zum Einsatz. Für die industrielle Vermessung (mit Lasertrackern) bietet die Leica Geosystems AG das Produkt "T-Cam" an, welches mit einer Vario-/Zoom-Objektivbasierten Lösung in einem Messbereich von 1,5 m bis 15 m einsetzbar ist. Durch eine Kombination einer verstellbaren Vergrösserung und einer ebenfalls einstellbaren Fokussierung kann damit ein Zielobjekt innerhalb dieses Messbereichs stet mit einem festen Bildmassstab (verhältnismässig gross) abgebildet werden, wobei gleichzeitig ein scharfes Abbild der Markierungen erzeugt wird. Dies bietet den Vorteil gegenüber anderen Lösungen, dass auf Basis des so erzeugbaren Abbilds zuverlässig (aufgrund der bekannten und optimalen Grösse des abgebildeten Objekts bzw. der Markierungen) drei rotatorische Freiheitsgrade eines zu erfassenden Objekts, z.B. eines Messhilfsobjekts mit bekannter Positionierung von Markierungen, sehr genau bestimmt werden können. Damit bietet dieses System eine erhöhte Messgenauigkeit gegenüber alternativer derartiger Messsysteme.

Ein Nachteil dieser Vario-Optik besteht jedoch in der limitierten Messreichweite, welche zumindest teilweise durch die strukturell gegebene Limitierung der Verstellbarkeit der Fokussiereinheit und der Vergrösserungseinheit besteht. Insbesondere in Anbetracht einer verstärkt geforderten Miniaturisierung von Messgeräten allgemein und von Trackersystemen im Speziellen bleibt die damit verbundene Limitierung der Messreichweite einer verbauten Vario-Optik nach dem Stand der Technik weiterhin bestehen bzw. könnte mit immer kleiner werdenden Messsystemen weiter zunehmen, was gleichzeitig zu zunehmend nachteiligen Messbedingungen führen kann.

Es ist daher Aufgabe der vorliegenden Erfindung einen verbesserten Lasertracker mit einem optischen Abbildungssystem bereitzustellen, wobei eine Orientierungsbestimmung eines Messobjekts zuverlässiger und präziser über einen vergrösserten Messbereich durchführbar ist.

Eine spezielle Aufgabe der vorliegenden Erfindung ist es, einen verbesserten Lasertracker mit einem optischen System derart bereitzustellen, dass ein Objekt, dessen Orientierung sowie insbesondere Position präzise festgestellt werden soll, bzw. Markierung zur Orientierungsbestimmung an diesem Objekt, über einen vergrösserten Messbereich mit einem jeweils optimierten Bildmassstab abgebildet und erfasst werden können, insbesondere in ihrer Gesamtheit mit einer möglichst grossen räumlichen Ausdehnung auf einem bilderfassenden Sensor abgebildet werden.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft einen Lasertracker zur Positions- und/oder Orientierungsbestimmung eines in definierter räumlicher Beziehung angebrachte Referenzmerkmale aufweisenden Messhilfsobjekts und insbesondere zur fortlaufenden Verfolgung des Messhilfsobjekts, mit einer eine Stehachse definierenden Basis, einer relativ zur Basis um die Stehachse motorisiert schwenkbare Stütze und einer relativ zur Stütze um eine Kippachse motorisiert drehbare Schwenkeinheit mit zumindest zwei Optikbaugruppen und einer Bilderfassungseinheit, wobei die Optikbaugruppen entlang einer optischen Achse der Schwenkeinheit verschiebbar sind und durch eine jeweilige aktuelle Positionierung der Optikbaugruppen ein Vergrösserungsfaktor für eine Erfassung eines Bildes mittels der Bilderfassungseinheit definiert ist. Zudem weist der Lasertracker eine Strahlquelle zur Emission eines Laserstrahls, eine Entfernungsmesseinheit zur Distanzmessung zum Messhilfsobjekt vermittels des Laserstrahls, eine Winkelmessfunktionalität zur Bestimmung einer Emissionsrichtung des Laserstrahls relativ zur Basis und eine Steuerungs- und Verarbeitungseinheit mit einer Objektabbildungsfunktionalität auf, bei deren Ausführung ein gesteuertes Positionieren der Optikbaugruppen in Abhängigkeit von einer aktuell ausgelösten Messung zum Messhilfsobjekt derart erfolgt, insbesondere fortlaufend, dass eine Abbildung für das Messhilfsobjekt mit einem bestimmten Bildmassstab für eine durch die ausgelöste Messung bestimmte Distanz zum Messhilfsobjekt auf der Bilderfassungseinheit bereitgestellt wird. Weiters ist eine Bildverarbeitungseinheit zur Abbildungsauswertung der abgebildeten Referenzmerkmale, sodass die räumliche Orientierung des Messhilfsobjekts bestimmbar ist, vorgesehen.

Durch die Objektabbildungsfunktionalität sind zumindest ein Normal-Distanzbereich und ein Fern-Distanzbereich für eine Distanz zum Messhilfsobjekt definiert und bei Ausführung der Objektabbildungsfunktionalität wird gesteuert durch die Steuerungs- und Verarbeitungseinheit der Vergrösserungsfaktor in Abhängigkeit von der durch die ausgelöste Messung bestimmten Distanz zum Messhilfsobjekt derart eingestellt, dass für Distanzen innerhalb des Normal-Distanzbereichs für die Abbildung ein im Wesentlichen konstanter Normal-Bildmassstab bereitgestellt wird und für jede Distanz innerhalb des Fern-Distanzbereichs für die Abbildung ein in Abhängigkeit von der jeweiligen Distanz variabler Fern-Bildmassstab bereitgestellt wird, wobei der Fern-Bildmassstab mit zunehmender Distanz zum Messhilfsobjekt kleiner wird. Zudem wird bei Ausführung der Abbildungsauswertung bei Vorliegen der bestimmten Distanz innerhalb des Fern-Distanzbereichs der jeweils für die bestimmte Distanz bereitgestellte Fern-Bildmassstab berücksichtigt.

Es versteht sich, dass die Bildverarbeitungseinheit eine gemeinsame Logik mit der Steuerungs- und Verarbeitungseinheit bilden kann und die Funktionalitäten der Bildverarbeitungseinheit, insbesondere die Abbildungsauswertung hinsichtlich der Referenzmerkmale, durch die Steuerungs- und Verarbeitungseinheit ausgeführt werden können.

Mittels der vorliegenden Erfindung wird eine Erweiterung des Messbereichs für ein Vario-Zoom-Objektiv (welches erfindungsgemäss als Schwenkeinheit ausgeführt ist) in einem Lasertracker bereitgestellt. Die beweglichen optischen Elemente (Optikbaugruppen) in solch einem Vario-Zoom-Objektiv, die individuell positionierbar und steuerbar sind, werden demnach basierend auf unterschiedlichen Funktionen (Kurven) positioniert. Die Funktionen sind dabei so spezifiziert, dass die Positionierung sowohl für den Normal- und Fern-Distanzbereich definiert bereitgestellt wird und dadurch ein bestimmter Vergrösserungsfaktor generiert wird. So ist eine Erzeugung verschiedenster optischer Systeme möglich, die beispielsweise eine Konstanz des Bildmassstabs für kürzere bis mittlere Distanzen (Normal-Distanzbereich), eine Übersichtkamera mit grossem Field-of-view oder eine nachfokussierende Messkamera für lange Distanzen (Fern-Distanzbereich) erzeugbar, wobei insbesondere hybride Typen möglich sind. Hierdurch kann der Messbereich des Vario-Zoom-Objektivs (T-Cam) beispielsweise nominell verdoppelt werden.

Die an dem Messhilfsobjekt angebrachten Referenzmerkmale können - wie Eingangs beschrieben - beispielsweise LEDs sein und/oder können verkörpert werden durch z.B. eine bestimmte Dimensionierung und/oder Form bzw. durch Kanten des Messhilfsobjekts.

Der im Wesentlichen konstante Normal-Bildmassstab ist im Rahmen dieser Erfindung so zu verstehen, dass dieser Massstab konstruktionsbedingt und bedingt durch eine im Besonderen optimal einzustellende Darstellung bzw. Erfassung der Abbildung gewissen Schwankungen unterliegen kann. In diesem Zusammenhang kann dieser Massstab beispielsweise minimal (d.h. beispielsweise im Promillebereich) so angepasst werden, dass in Abhängigkeit der Orientierung des Messhilfsinstruments - z.B. wenn dessen Haupterstreckungsachse im Wesentlichen parallel zu einer Bilddiagonalen der Bilderfassungseinheit liegt und das Messhilfsinstruments dann grösser auf die Bilderfassungseinheit abgebildet werden kann, als wenn das Instrument vertikal im Bilderfassungsbereich abgebildet wird - der Normal-Bildmassstab derart geringfügig angepasst wird, dass die Abbildung hinsichtlich der Verteilung der Referenzmerkmale im Bild bildausfüllend erzeugbar ist.

Gemäss einer speziellen Ausführungsform der Erfindung wird der Normal-Bildmassstab für die Distanzen innerhalb des Normal-Distanzbereichs derart bereitgestellt, dass der Bilderfassungsbereich der Bilderfassungseinheit hinsichtlich einer Verteilung der abzubildenden Referenzmerkmale optimal ausgefüllt ist und/oder der Normal-Bildmassstab für die Distanzen innerhalb des Normal-Distanzbereichs identisch ist.

Hinsichtlich des für Distanzen innerhalb des Normal-Distanzbereichs bereitgestellten identischen Normal-Bildmassstabs versteht sich, dass im Rahmen des technisch Möglichen der identische Normal-Bildmassstab so erzeugt wird, dass ein mit diesem Massstab abgebildetes Objekt (für Distanzen innerhalb des Normal-Distanzbereichs) immer gleich gross abgebildet wird. D.h. die Optikbaugruppen sind so positioniert, dass die Abbildung (theoretisch) mit dem identischen Massstab erzeugt wird, und die Bilderfassungseinheit ist so ausgestaltet, dass ein Bild des Objekts mit der dem Massstab entsprechenden Grösse erfassbar ist. Damit sind im Zusammenhang mit vorliegender Erfindung auch Abbildungen, die strukturell- und/oder konstruktiv- und/oder sensorbedingte (geringe) Abweichungen von einer exakt identisch genau gleich grossen Darstellung aufweisen, als Abbildungen mit einem identischen Normal-Bildmassstab zu verstehen.

Bezüglich der Positionierung der Optikbaugruppen in der Schwenkeinheit sind gemäss einer spezifischen Ausführungsform zumindest zwei Optikpositionierungskurven für die Positionierung der zumindest zwei Optikbaugruppen hinterlegt, wobei die zumindest zwei Optikpositionierungskurven hybride strukturiert sind und eine Positionierung der zumindest zwei Optikbaugruppen für Distanzen innerhalb des Normal-Distanzbereichs und/oder des Fern-Distanzbereichs angeben. Als hybride strukturierte Optikpositionierungskurve wird eine Kurve verstanden, die zumindest zwei Bereiche aufweist, innerhalb derer die Kurve jeweils einen homogenen Verlauf (beispielsweise hinsichtlich der Kurvenkrümmung, der Steigung(-sänderung) und/oder der Differenzierbarkeit) aufweist, wobei die Verläufe (die Homogenitäten) der beiden Bereiche unterschiedlich sind, sodass die Kurve in ihrer Gesamtheit nicht einen homogenen Verlauf aufweist.

In diesem Zusammenhang können die zumindest zwei Optikbaugruppen ferner insbesondere gesteuert durch die Steuerungs- und Verarbeitungseinheit basierend auf den zumindest zwei Optikpositionierungskurven positionierbar sein.

Eine weitere Ausführungsform für einen erfindungsgemässen Lasertracker betreffend sind dabei eine Fokussiergruppe-Positionierungskurve zur Positionierung einer Fokussiergruppe und eine Zoomgruppe-Positionierungskurve zur Positionierung einer Zoomgruppe in Abhängigkeit von der bestimmten Distanz zum Messhilfsobjekt hinterlegt, wobei die Fokussiergruppe eine erste der zumindest zwei Optikbaugruppen und die Zoomgruppe eine zweite der zumindest zwei Optikbaugruppen verkörpert. Hierbei können die Fokussiergruppe-Positionierungskurve und die Zoomgruppe-Positionierungskurve insbesondere die Positionierung der Fokussiergruppe und der Zoomgruppe für Distanzen innerhalb des Normal-Distanzbereichs und/oder des Fern-Distanzbereichs angeben, insbesondere wobei im Wesentlichen vermittels der Positionierung der Fokussiergruppe eine Fokussierung der Abbildung und vermittels der Positionierung der Zoomgruppe eine Vergrösserung der Abbildung einstellbar ist.

Ein weiterer Aspekt der Erfindung betrifft die Bestimmung der Orientierung des Messhilfsobjekts. Die Steuerungs- und Verarbeitungseinheit kann hierfür insbesondere eine Orientierungsbestimmungsfunktionalität aufweisen, bei deren Ausführung die räumliche Orientierung des Messhilfsobjekts basierend auf der Abbildungsauswertung mittels Bildverarbeitung abgeleitet wird, insbesondere mittels Bestimmen von Bildpositionen für die abgebildeten Referenzmerkmale durch Schwerpunktberechnung und/oder mittels Kantenextraktion und/oder mittels Helligkeits- und/oder Kontrastanalyse.

Für eine solche Orientierungsbestimmung wird dann der jeweilige Bildmassstab für die aktuelle Abbildung herangezogen und bei einem dafür ausgeführten Erkennen und Auslesen von Bildpositionen für die Referenzmerkmale berücksichtigt. Dadurch ist aus der Lage der Referenzmerkmale, z.B. von LEDs, aus der Abbildung eine Orientierung des Messhilfsinstruments schnell, mit grosser Genauigkeit und insbesondere eindeutig bestimmbar, wobei der Bildmassstab bei vorliegen einer Entfernung zwischen Messhilfsinstrument und Lasertracker innerhalb des Normal-Distanzbereichs im Wesentlichen stets konstant (insbesondere identisch oder hinsichtlich der Verteilung der abzubildenden Referenzmerkmale bildausfüllend) und dadurch bekannt ist und der Fern-Bildmassstab variabel und durch die jeweilige relative Positionierung der beiden Optikbaugruppen in der Schwenkeinheit in Verbindung mit der Kenntnis der Entfernung zum Messhilfsobjekt ebenfalls bekannt ist. Der jeweils vorliegende Bildmassstab wird bei der Bildauswertung berücksichtigt. Durch die Kenntnis des jeweiligen Massstabes ist somit auch die Grösse, mit der das Objekt auf der Bilderfassungseinheit abgebildet wird und erfassbar ist, bekannt. Aus der Lage der Referenzmerkmale und der bekannten Grösse des Objekts in einem erfassten Bild kann somit eindeutig eine Orientierung des Objekts abgeleitet werden.

Die strukturelle Ausgestaltung des Lasertrackers kann gemäss einer spezifischen Ausführungsform erfindungsgemäss derart vorgesehen sein, dass die Schwenkeinheit eine Filtereinheit zur optischen Filterung von einfallender Strahlung aufweist, insbesondere ein Infrarotfilter zur derartigen Filterung, dass Licht innerhalb eines definierten infraroten Wellenlängenbereichs mittels der Filtereinheit transmittiert, absorbiert oder reflektiert wird und gegebenenfalls auf die Bilderfassungseinheit trifft.

Durch einen solchen Filter können beispielsweise Streustrahlung oder ungewollte Strahlungseinflüsse verringert bzw. zur Gänze verhindert werden, wodurch eine Steigerung der Genauigkeit für z.B. die Bestimmung der Positionen von Referenzmerkmalen auf dem bilderfassenden Sensor erreicht werden kann.

Insbesondere können erfindungsgemäss bei Ausführung der Objektabbildungsfunktionalität eine Anzahl von als die Referenzmerkmale vorgesehenen Orientierungsmarkierungen, die durch die Filtereinheit transmittierbare Strahlung emittieren und/oder reflektieren, auf der Bilderfassungseinheit bereitgestellt werden, insbesondere wobei ein Bild der bereitgestellten Orientierungsmarkierungen durch die Bilderfassungseinheit erfasst wird und eine räumliche Orientierung des Messhilfsobjekts aus durch die Abbildungsauswertung bestimmten Bildpositionen für die Orientierungsmarkierungen abgeleitet wird.

Neben dem für die Positionierung der Optikbaugruppen festgelegten Normal- und dem Fern-Distanzbereich kann im Rahmen der Erfindung durch die Objektabbildungsfunktionalität zumindest ein weiterer Distanzbereich mit einem Positionierungskriterium zur Positionierung der zumindest zwei Optikbaugruppen in Abhängigkeit von einer Distanz zum Messhilfsobjekt, die innerhalb des weiteren Distanzbereichs liegt, definiert sein, insbesondere wobei das Positionierungskriterium repräsentiert wird durch eine weitere Optikpositionierungskurven.

In diesem Zusammenhang kann beispielsweise eine Positionierungskurve derart hybride strukturiert sein, dass diese unterschiedliche (insbesondere mehr als zwei) Teile aufweist, wobei jeder Teil eine spezifische Positionierungsvorschrift für einen Distanzbereich angibt. Zur Positionierung der Optikbaugruppe können die zumindest zwei Optikbaugruppen erfindungsgemäss insbesondere jeweils mittels eines optischen Wagens entlang der optischen Achse verschiebbar und positionierbar sein. Ferner kann die Schwenkeinheit einen Spindelantrieb zur Verschiebung und Positionierung der zumindest zwei Optikbaugruppen entlang der optischen Achse aufweisen.

Weiter kann die Schwenkeinheit erfindungsgemäss insbesondere eine in einen durch die mindestens zwei Optikbaugruppen definierten optischen Strahlengang einschwenkbare Strahlungsblockiereinheit zur Verhinderung eines Strahlungsdurchtritts zur Bilderfassungseinheit aufweisen, insbesondere einen Shutter zur Blockierung des Strahlengangs, und/oder die Bilderfassungseinheit kann ausgebildet sein als CCD- oder CMOS-Kamera.

Bezüglich der Ausgestaltung des Lasertrackers kann gemäss einer speziellen Ausführungsform der Lasertracker eine zumindest die Entfernungsmesseinheit, insbesondere die Strahlquelle, aufweisende und um die Kippachse relativ Stütze motorisiert schwenkbare Strahllenkeinheit aufweisen, wobei die Schwenkeinheit verkörpert ist durch die Strahllenkeinheit und durch eine Ausrichtung der Strahllenkeinheit eine Bilderfassungsrichtung definiert ist und wobei die Strahllenkeinheit zur Emission des Laserstrahls in Emissionsrichtung und zum Empfang von zumindest einem Teil des am Messhilfsobjekt reflektierten Laserstrahls ausgebildet ist.

Die Erfindung betrifft ausserdem ein Objekterfassungsverfahren zum Orientierungsbestimmen eines in definierter räumlicher Beziehung angebrachte Referenzmerkmale aufweisenden Messhilfsobjekts für und mit einem Lasertracker mit einer eine Stehachse definierenden Basis, einer relativ zur Basis um die Stehachse motorisiert schwenkbaren Stütze und mit einer relativ zur Stütze um eine Kippachse motorisiert drehbare Schwenkeinheit zum Erfassen eines Bildes des Messhilfsobjekts, wobei im Rahmen des Objekterfassungsverfahrens ein Distanzmessen zum Bestimmen einer aktuellen Distanz zum Messhilfsobjekt vermittels eines Laserstrahls erfolgt. Zudem erfolgt ein Einstellen, insbesondere fortlaufend, eines Vergrösserungsfaktors in Abhängigkeit der aktuellen Distanz zum Messhilfsobjekt derart, dass eine Abbildung für das Messhilfsobjekt mit einem für die aktuelle Distanz bestimmten Bildmassstab für das Erfassen des Bildes bereitgestellt wird, und das Bild wird erfasst.

Erfindungsgemäss sind zumindest ein Normal-Distanzbereich und ein Fern-Distanzbereich definiert und das Einstellen des Vergrösserungsfaktors erfolgt in Abhängigkeit von der aktuellen Distanz zum Messhilfsobjekt derart, dass für Distanzen innerhalb des Normal-Distanzbereichs für die Abbildung ein im Wesentlichen konstanter Normal-Bildmassstab bereitgestellt wird und für jede Distanz innerhalb des Fern-Distanzbereichs für die Abbildung ein in Abhängigkeit von der jeweiligen Distanz variabler Fern-Bildmassstab bereitgestellt wird, wobei der Fern-Bildmassstab mit zunehmender Distanz zum Messhilfsobjekt kleiner wird. Der jeweils für die bestimmte Distanz bereitgestellte Fern-Bildmassstab wird ferner bei einem auf Basis der Abbildung und mittels Bildverarbeitung erfolgenden Abbildungsauswerten hinsichtlich der Referenzmerkmale zum Ausrichtungsbestimmen berücksichtigt.

Bezüglich des Einstellens des Vergrösserungsfaktors kann dieses Einstellen insbesondere basierend auf hinterlegten Optikpositionierungskurven erfolgen, insbesondere wobei eine Fokussiergruppe-Positionierungskurve eine Fokussierstellung für eine Fokussiergruppe und eine Zoomgruppe-Positionierungskurve eine Vergrösserungsstellung für eine Zoomgruppe in Abhängigkeit von der Distanz zum Messhilfsobjekt angeben.

Der Normal-Bildmassstab kann erfindungsgemäss insbesondere für die Distanzen innerhalb des Normal-Distanzbereichs derart bereitgestellt werden, dass das Bild durch die Verteilung der abgebildeten Referenzmerkmale im Bild ausgefüllt ist und/oder der Normal-Bildmassstab für die Distanzen innerhalb des Normal-Distanzbereichs stets identisch ist.

Gemäss einer spezifischen Ausführungsform der Erfindung ist zumindest ein weiterer Distanzbereich mit einem Positionierungskriterium zur Einstellung des Vergrösserungsfaktors in Abhängigkeit von einer jeweiligen Distanz zum Messhilfsobjekt, die innerhalb des weiteren Distanzbereichs liegt, definiert, insbesondere wobei das Positionierungskriterium repräsentiert wird durch eine weitere Optikpositionierungskurve.

Im Zusammenhang mit dem Erfassen der Referenzmerkmale kann insbesondere ein Filtern von einfallender Strahlung erfindungsgemäss derart erfolgen, dass Strahlung innerhalb eines definierten Wellenlängenbereichs in dem Bild erfasst wird und insbesondere eine räumliche Orientierung des Messhilfsobjekts aus der im Bild erfassten gefilterten Strahlung abgeleitet wird, insbesondere aus mittels des Abbildungsauswertens ermittelten Bildpositionen, insbesondere wobei infrarotes Licht derart gefiltert wird, dass Licht innerhalb eines definierten infraroten Bereichs transmittiert, absorbiert oder reflektiert wird, und/oder das Messhilfsobjekt Orientierungsmarkierungen aufweist, welche Strahlung innerhalb des definierten Wellenlängenbereichs emittieren und/oder reflektieren. Somit kann die Ausrichtung der Messhilfsobjekts auf Basis der erfassten, gefilterten Strahlung und der Bestimmung von Bildpositionen für die erfasste Strahlung bestimmt werden.

Ausserdem betrifft die Erfindung ein Computerprogrammprodukt, das auf einem maschinenlesbaren Träger gespeichert ist. Diese ist konfiguriert zur Steuerung des Entfernungsmessens, des Einstellens der Vergrösserung und des Erfassens des Bildes gemäss des erfindungsgemässen Objekterfassungsverfahrens, insbesondere wenn das Computerprogrammprodukt auf einer Steuerungs- und Verarbeitungseinheit eines erfindungsgemässen Lasertrackers ausgeführt wird.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: zwei Ausführungsformen eines erfindungsgemässen Lasertrackers und ein Messhilfsinstrument;
- Fig.2a-b: eine erste Ausführungsform einer Teleskopeinheit eines erfindungsgemässen Lasertrackers mit zwei Optikbaugruppen und einer Bilderfassungseinheit;
- Fig.3: eine weitere Ausführungsform einer Teleskopeinheit eines erfindungsgemässen Lasertrackers mit zwei Optikbaugruppen, einem Prisma und einer Bilderfassungseinheit; und
- Fig.4: eine erfindungsgemässe Positionierungsvorschrift für eine jeweilige Positionierung zweier Optikbaugruppen eines Lasertrackers in Abhängigkeit von einer zu einem Objekt gemessene Distanz.

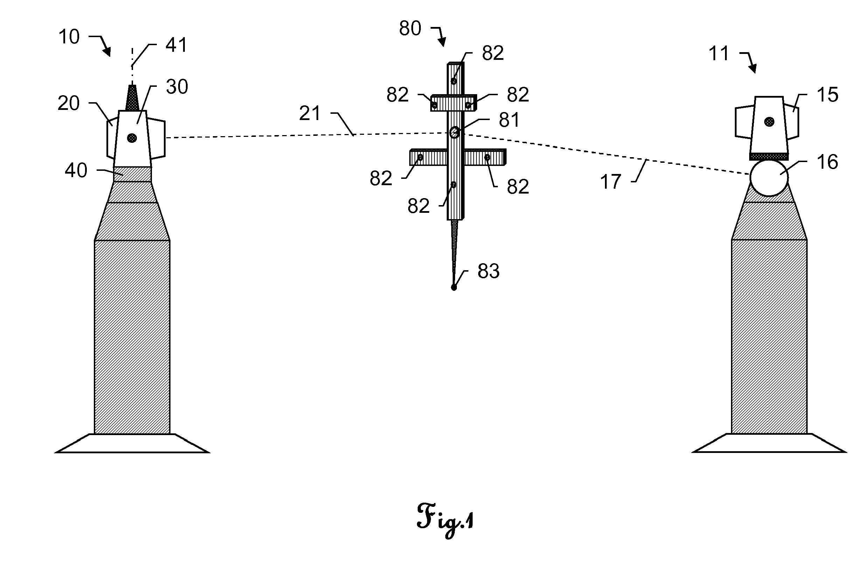

Figur 1 zeigt zwei Ausführungsformen für erfindungsgemässe Lasertracker 10,11 und ein Messhilfsobjekt 80, dessen Position und Orientierung (6DoF) bestimmt werden soll und welches gegebenenfalls mit einem jeweiligen Messlaserstrahl 17,21 verfolgt werden soll. Das Messhilfsobjekt 80 ist hier als taktiles Messgerät ausgebildet. Der erste Lasertracker 10 weist eine Basis 40 und eine Stütze 30 auf, wobei die Stütze 30 um eine durch die Basis 40 definierte Schwenkachse 41 relativ zur Basis 40 schwenkbar bzw. rotierbar angeordnet ist. Zudem ist eine Anzieleinheit 20 (Schwenkeinheit) derart an der Stütze 30 angeordnet, dass die Anzieleinheit 20 relativ zur Stütze 30 um eine Kippsachse (Neigungs- bzw. Transitachse) drehbar ist. Durch eine so um zwei Achsen bereitgestellte Ausrichtungsmöglichkeit der Anzieleinheit 20 kann ein von dieser Einheit 20 emittierter Laserstrahl 21 exakt ausgerichtet und damit Ziele angezielt werden. Dieses Ausrichten kann mittels einer Motorisierung automatisch erfolgen. Die Schwenkachse 41 und die Neigungsachse sind hierbei im Wesentlichen orthogonal zueinander angeordnet, d.h. geringe Abweichungen von einer exakten Achsenorthogonalität können vorbestimmt und im System, beispielsweise zur Kompensation von dadurch entstehenden Messfehlern, hinterlegt sein.

In der gezeigten Anordnung ist der Messlaserstrahl 21 auf einen Reflektor 81 (Retroreflektor) am Messhilfsobjekt 80 gerichtet und wird an diesem zurück zum Lasertracker 10 retro-reflektiert. Mittels dieses Messlaserstrahls 21 kann eine Entfernung zum Objekt 80 bzw. zum Reflektor 81, insbesondere mittels Laufzeitmessung, mittels des Phasenmessprinzips oder mittels des Fizeau-Prinzips, bestimmt werden. Der Lasertracker 10 verfügt hierzu über eine Entfernungsmesseinheit (mit Interferometer und Absolutdistanzmesser) und über Winkelmesser, die eine Stellung der Anzieleinheit 20, mittels derer der Laserstrahl 21 definiert ausgerichtet und geführt werden kann, und somit eine Ausbreitungsrichtung des Laserstrahls 21 bestimmbar machen.

Ausserdem weist der Lasertracker 10, insbesondere die Schwenkeinheit 20, eine Bilderfassungseinheit auf. Diese Bilderfassungseinheit kann zum Zweck einer Positionsbestimmung einer Sensorbelichtung auf einem Sensor bzw. in einem erfassten Bild einen CMOS aufweisen oder ist insbesondere als CCD- oder Pixelsensorarray-Kamera ausgebildet. Derartige Sensoren erlauben eine positionssensitive Detektion von erfasster Belichtung auf dem Detektor. Weiters weist das Messhilfsinstrument 80 einen taktilen Sensor auf, dessen Kontaktpunkt 83 mit einem zu vermessenden Zielobjekt in Kontakt gebracht werden kann. Während dieser Kontakt zwischen dem Tastwerkzeug 80 und dem Zielobjekt besteht können eine Position des Kontaktpunktes 83 im Raum und damit die Koordinaten eines Punkts am Zielobjekt exakt bestimmt werden. Dieses Bestimmen erfolgt vermittels einer definierten relativen Positionierung des Kontaktpunkts 83 zum Reflektor 81 und zu am Messhilfsinstrument 80 angeordneten Orientierungsmarkierungen 82 (= Referenzmerkmale), die beispielsweise als Leuchtdioden ausgebildet sein können. Alternativ können die Orientierungsmarkierungen 82 auch derart ausgebildet sein, dass diese bei einem Beleuchten, z.B. mit Strahlung einer definierten Wellenlänge, die auftreffende Strahlung reflektieren (z.B. als Retroreflektoren ausgebildete Orientierungsmarkierungen 82), insbesondere eine bestimmte Leuchtcharakteristik zeigen, oder dass diese ein definiertes Muster oder Farbkodierung aufweisen. Aus der Lage bzw. Verteilung der Orientierungsmarkierungen 82 in einem mit einem Sensor der Bilderfassungseinheit erfassten Bild kann somit eine Orientierung des Tastwerkzeugs 80 bestimmt werden.

Als Grundlage für die Bestimmung der Orientierung dient damit das erfasste Bild des Messhilfsobjekts 80 bzw. der Orientierungsmarkierungen 82 des Messhilfsobjekts 80. Für eine insbesondere fokussierte Erfassung dieser Markierungen 82 mit einem optimalen Bildmassstab verfügt der Lasertracker 10 über eine erfindungsgemässe Objektabbildungsfunktionalität mittels derer (bei Ausführung) eine scharfe Abbildung mit bekanntem Massstab des Objekts 80 bzw. der Orientierungsmarkierungen 82 auf der Bilderfassungseinheit erzeugt wird. Hierfür wird zunächst die Distanz zum Objekt 80 durch die Entfernungsmesseinheit ermittelt und basierend auf dieser gemessenen Distanz Optikbaugruppen (z.B. eine Fokussiergruppe und eine Zoomgruppe) der Anzieleinheit 20 in einer definierten Position in der Anzieleinheit 20 positioniert. Eine Erfassungsrichtung der Schwenkeinheit 20 und die Ausbreitungsrichtung des zur Messung der Distanz verwendeten Laserstrahls 21 sind dabei derart relativ zueinander ausgelegt, dass das mit dem Strahl 21 angezielte Objekt 80 mittels der Bilderfassungseinheit erfassbar ist.

Durch die in Abhängigkeit von der Entfernung zum Messhilfsinstrument 80 frei einstellbare Positionierung der Optikbaugruppen kann somit - wobei die Dimensionierung des Messhilfsobjekts 80 bekannt ist - für jede gemessene Distanz zum Objekt 80 eine optimale Abbildung des Objekts 80 bzw. der Orientierungsmarkierungen 82 auf der Bilderfassungseinheit bereitgestellt werden, wodurch die Orientierungsmarkierungen 82 auf einem dabei erfassbaren Bild optimal erkennbar (z.B. mittels Bildverarbeitung) sind und daraus eine aktuelle Orientierung des Objekts 80 ableitbar ist. Die Optikbaugruppen können dabei unabhängig voneinander positioniert werden (z.B. als Fokussiergruppe und Zoomgruppe).

Für diese so einstellbare Abbildung sind für die Positionierungssteuerung der Optikbaugruppen zwei Distanzbereiche (z.B. ein Normal-Distanzbereich und ein Fern-Distanzbereich) definiert, wobei die Positionierung für den ersten Distanzbereich so erfolgt, dass die Objektmarkierungen 82 für Distanzen innerhalb des ersten Distanzbereichs stets mit einem im Rahmen des technisch Möglichen im Wesentlichen konstanten, insbesondere identischen, Bildmassstab (insbesondere scharf) abgebildet werden, d.h. dass das Objekt 80 im Speziellen mit immer derselben festen (und durch die definierte Positionierung z.B. der Zoomgruppe bekannten) Grösse auf der Bilderfassungseinheit abbildbar ist, vorzugsweise so, dass die Orientierungsmarkierungen 82 dabei scharf erfassbar sind. Aus der Lage der Markierungen 82 in dem erfassten Bild kann dann beispielsweise mittels Bildverarbeitung die Orientierung des Objekts 80 bestimmt werden.

Für Entfernungen innerhalb des zweiten Distanzbereichs werden die Optikbaugruppen jeweils so platziert, dass ebenfalls eine scharfe Abbildung des Objekt 80 bzw. der Orientierungsmarkierungen 82 auf der Bilderfassungseinheit bereitgestellt wird. Zudem wird durch eine Positionierung in diesem zweiten Distanzbereich der feste Bildmassstab für den ersten Distanzbereich nicht länger erhalten, sondern ein jeweiliger Vergrösserungsfaktor variiert in Abhängigkeit von der jeweiligen vorliegenden Entfernung zum Objekt 80. Der Bildmassstab in diesem zweiten Distanzbereichs nimmt mit zunehmender Distanz zum Messhilfsinstrument ab. Somit variiert ebenfalls die Grösse des Abbilds für das Objekt 80 bzw. die relative Lage der Markierungen 82 auf der Kamera. Der hier jeweils vorliegende Bildmassstab ist durch die definierte Positionierung der Optikbaugruppen und durch die bestimmte Distanz bekannt und wird bei einem bildverarbeitungsbasierenden Bestimmen und Auslesen von Bildpositionen für die Referenzmerkmale (z.B. für eine Orientierungsbestimmung des Messhilfsobjekts 80) berücksichtigt.

Der erste Distanzbereich entspricht dabei vorzugsweise einem Normal-Bereich, z.B. einem Bereich für Messungen bis zu 15 m oder 20 m, und der zweite Distanzbereich einem Bereich, der Messungen über den ersten Bereich hinaus abdeckt, z.B. > 15 m oder > 20 m. Ferner können mehrere Distanzbereiche definiert sein, wobei für jeden Bereich eine bestimmte Positionierungsfunktion zur Positionierung der Optikbaugruppen gespeichert ist.

Die Positionierung der beiden optischen Baugruppen kann insbesondere durch eine jeweilige Positionierungskurve erfolgen. Diese Kurven geben jeweils an, in welcher Stellung die jeweilige Optikbaugruppe für welche gemessene Distanz zu positionieren ist. Z.B. stellt eine Zoomgruppe-Positionierungskurve einer Steuerungs- und Verarbeitungseinheit des Trackers die Information bereit, in welche Stellung die Zoomgruppe verschoben werden muss, damit ein optimales Abbild (hinsichtlich des dadurch erzeugten Bildmassstabes) auf der Bilderfassungseinheit erzeugt wird.

Der Tracker 10 weist ausserdem optional ein Infrarotfilter auf. Das Filter ist dabei derart in die Schwenkeinheit 20 integriert, dass einfallende Strahlung derart gefiltert wird, dass nur Strahlung mit einer Wellenlänge innerhalb eines durch das Filter definierten Wellenlängenbereichs transmittiert und auf die Bilderfassungseinheit trifft. Dadurch können ungewollte Streustrahlung oder andere Fremdlichteinflüsse verhindert bzw. verringert werden und eine Steigerung der Messgenauigkeit erreicht werden. Mit dem Einsatz eines solchen Filters kann ferner ein selektives Erfassen von nur reflektierter (bei passiver Beleuchtung mit geeigneter IR-Strahlung) oder emittierter (bei aktiver Aussendung von IR-Strahlung) Strahlung seitens der Orientierungsmarkierungen 82 bereitgestellt werden. Dadurch werden mit einem Bild im Wesentlichen nur die Markierungen 82 erfasst und aus deren Lage im Bild kann auf eine Orientierung des Objekts 82 geschlossen werden (bei bekannter relativer Positionierung der Markierungen 82 am Objekt 80).

Der zweite Lasertracker 11 weist eine von einer Schwenkeinheit 15 (Vario-Kamera) separierte Strahlführungseinheit 16 zur Emission eines zweiten Laserstrahls 17 auf, welcher ebenfalls auf den Reflektor 81 ausgerichtet ist. Sowohl der Laserstrahl 17 als auch die Schwenkeinheit 15 sind jeweils um zwei Achsen motorisiert schwenkbar und können dadurch derart ausgerichtet werden, dass mittels der Vario-Kamera 15 das mit dem Laserstrahl 17 angezielte Ziel 81 und die Orientierungsmarkierungen 82 (Referenzmerkmale) des Messhilfsobjekts 80 erfasst werden können. Somit können auch hier eine präzise Entfernung zum Reflektor 81 und eine Orientierung des Objekts 80 anhand der räumlichen Lage der Orientierungsmarkierungen 82 bestimmt werden.

Zur jeweiligen Ausrichtung der Laserstrahlen 17,21 auf den Reflektor 81 sind an den Lasertrackern 10,11 jeweils Beleuchtungsmittel zur Beleuchtung des Reflektors 81 mit Strahlung einer bestimmten Wellenlänge, insbesondere im infraroten Wellenlängenbereich, vorgesehen und zusätzliche zumindest eine Zielsuchkamera mit einem positionssensitiven Detektor, eine so genannte ATR-Kamera (automatic target recognition), an jedem Tracker 10,11 angeordnet. Die an dem Reflektor 81 reflektierte und zum Lasertracker 10,11 rückgestrahlte Beleuchtungsstrahlung kann jeweils mittels der Kamera detektiert und mit den positionssensitiven Detektoren kann eine Position des Reflektors 81 auf dem jeweiligen Detektor abgebildet werden. Somit kann sowohl mit dem ersten Lasertracker 10 als auch mit dem zweiten Lasertracker 11 eine abgebildete Position des Reflektors bestimmt und in Abhängigkeit dieser detektierten Suchbildpositionen das Ziel (Reflektor 81) im Bild aufgefunden und die Anzieleinheit 20 (Schwenkeinheit) bzw. die Strahlführungseinheit 16 derart ausgerichtet werden, dass das Ziel mit dem Messstrahl 17,21 automatisch angezielt wird bzw. der Laserstrahl 17,21 dem Ziel 81 automatisch (iterativ) angenähert wird. Die Lasertracker 10,11 können alternativ jeweils zumindest zwei Kameras mit jeweils einem positionssensitiven Detektor aufweisen, wobei für jeden Tracker 10,11 aus den jeweils zwei erfassten Suchbildpositionen für den Reflektor 81 jeweils beispielsweise eine Grobposition des Reflektors 81 bestimmt werden kann.

Die Entfernungsmesseinheit des jeweiligen Lasertrackers 10,11 stellt eine Entfernungsinformation zum Ziel 81 auf Basis einer Bestimmung einer relativen oder absoluten Distanz zwischen dem jeweiligen Tracker 10,11 und dem Ziel 81 und einer Bestimmung einer Änderung dieser Distanz bereit. Wird dabei die absolute Distanz insbesondere mittels Laufzeitmessung, mittels des Phasenmessprinzips oder mittels des Fizeau-Prinzips bestimmt, so wird zur Bestimmung der Distanzänderung eine Messung mit einem der jeweiligen Entfernungsmesseinheit zugeordneten Interferometer durchgeführt. Die Messstrahlung 17,21 wird derart aus dem Tracker 10,11 ausgesendet, dass diese auf das Ziel 81 trifft und an diesem rückreflektiert wird. Der reflektierte Strahl bzw. Teile des reflektierten Strahls werden dann wiederum seitens des Trackers 10,11 erfasst und entlang eines Messpfades zum Interferometerdetektor geführt, wo die Referenzstrahlung mit der empfangenen Messstrahlung 17,21 überlagert wird. Durch diese Überlagerung entsteht eine Interferenz aus den beiden Strahlungen, welche am Detektor erfasst und aufgelöst werden kann.

Die Schwenkeinheit 15 des Lasertrackers 11 weist zumindest zwei Optikbaugruppen und einem Kamerasensor auf, wobei der Tracker 11 zusätzlich über eine Steuerungs- und Verarbeitungseinheit mit einer erfindungsgemässen Objektabbildungsfunktionalität zur bestimmten Positionierung der Optikbaugruppen verfügt.

Zur jeweiligen Positionierung der Optikbaugruppen (z.B. einer Zoomgruppe und einer Fokussiergruppe) bei Ausführung der Objektabbildungsfunktionalität sind mindesten zwei Messbereiche (Distanzbereiche) definiert, wobei für Entfernung zum Objekt 80 innerhalb eines ersten Messbereichs jeweils eine Positionierung der Optikbaugruppen derart erfolgt, dass eine (fokussierte) Abbildung für das Objekt 80 auf dem Kamerasensor mit einem im Wesentlichen konstanten Bildmassstab, insbesondere stets mit demselben Bildmassstab (d.h. mit gleich bleibender Grösse auf dem Sensor) oder den Erfassungsbereich der Bilderfassungseinheit ausfüllend, bereitgestellt wird. Für Entfernungen zum Objekt 80, die in einem zweiten Messbereich liegen, wird eine Positionierung der optischen Gruppen so vollzogen, dass das Objekt 80 jeweils scharf aber in unterschiedlichen Grössen, d.h. mit unterschiedlichen Bildmassstäben, abgebildet wird.

Mit der jeweiligen Abbildung für das Objekt 80 auf dem Kamerasensor kann jeweils ein aktuelles Bild des Objekts 80 erfasst werden und aus dem Bild eine aktuelle Orientierung des Objekts 80 bestimmt werden. Diese kann beispielsweise mittels Schwerpunktsbestimmung im Bild für die im Bild erfassten Orientierungsmarkierungen 82 (zur Bestimmung von Bildpositionen für die Orientierungsmarkierungen 82 im Bild) oder mittels Kantenextraktion zur Identifikation des Objekts 80 und/oder mittels Analyse der im Bild vorliegenden Helligkeiten und/oder Kontraste zur Bestimmung einer Lage der im Bild erfassten Orientierungsmarkierungen 82 abgeleitet werden. Die Markierungen 82 werden dabei unter Berücksichtigung des dem jeweiligen Bild zugeordneten Bildmassstabes erkannt und ausgelesen und der Massstab kann zudem für die Bestimmung der räumlichen Orientierung des Messhilfsobjekts berücksichtigt werden.

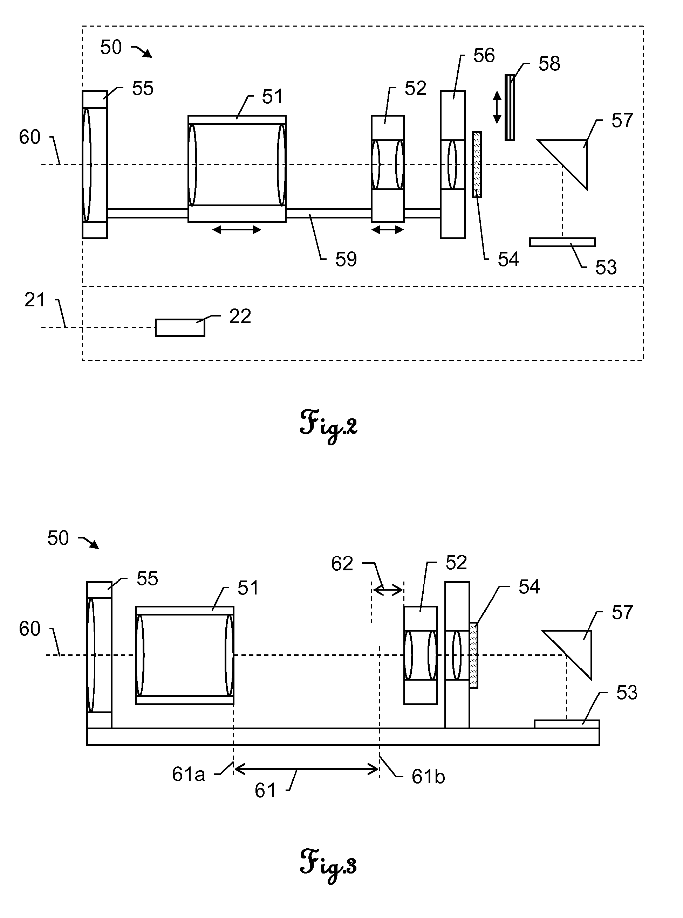

Figur 2 zeigt eine erste Ausführungsform einer Kameraeinheit 50 eines erfindungsgemässen Lasertrackers mit zwei Optikbaugruppen 51,52, wobei eine Zoomgruppe 51 und eine Fokussiergruppe 52 vorgesehen sind, und einer Bilderfassungseinheit 53, z.B. einem CCD- oder CMOS-Sensor. Zudem ist eine einen Laserstrahl 21 emittierende Entfernungsmesseinheit 22 gezeigt, mit der eine Distanz zu beispielsweise einem bekannten Messhilfsinstrument gemessen werden kann.

Mit der Kameraeinheit 50 ist das bekannte Messhilfsinstrument (oder ein alternatives Objekt, welches mit der Entfernungsmesseinheit 22 angezielt wird) erfassbar. Dabei wird die Strahlung entlang der optischen Achse 60 der Kameraeinheit 50 durch eine Frontlinsenanordnung 55, durch die Optikbaugruppen 51,52, durch eine rückseitige Linse 56 und einen Infrarotfilter 54 auf ein Strahlumlenkmittel 57 geführt und von dort auf die Bilderfassungseinheit 53 umgelenkt. In der Kameraeinheit 50 ist zudem eine Strahlungsblockiereinheit 58 (z.B. ein Shutter zur Unterbrechung des Strahlengangs) zur Verhinderung eines Strahlungsdurchtritts auf die Bilderfassungseinheit 53 vorgesehen. Die Strahlungsblockiereinheit 58 ist hierfür in den Strahlengang einschwenkbar ausgebildet. Durch eine solche totale Abdunklung der Bilderfassungseinheit 53 kann z.B. ein Schwarzabgleich durchgeführt werden.

Die Optikbaugruppen 51,52 sind vermittels einer Führung 59 beweglich entlang der optischen Achse 60 gelagert. Durch die derartige Lagerung können diese beiden Gruppen 51,52 unabhängig voneinander jeweils entlang der optischen Achse 60 verschoben werden, wodurch eine jeweilige definierte Abbildung für ein Messhilfsobjekt auf der Bilderfassungseinheit 53 eingestellt werden kann.

Eine Steuerung der jeweiligen Position bzw. von Positionsänderung der Optikbaugruppen 51,52 wird dabei in Abhängigkeit von einer mittels der Entfernungsmesseinheit 22 bestimmten Distanz zu dem jeweils abzubildenden Objekt (Messhilfsinstrument) durchgeführt. Die Optikbaugruppen 51,52 werden also in Abhängigkeit einer bei Auslösen einer Messung gemessenen Distanz so positioniert, dass das dadurch erzeugte Abbild für ein angemessenes Objekt auf der Bilderfassungseinheit 53 mit einem vorbestimmten Massstab, insbesondere scharf (fokussiert), erzeugt wird bzw. mit einem vorbestimmten Abbildungsverhältnis abgebildet wird.

Befindet sich das abzubildende Objekt (dessen Orientierung auf Basis der Abbildung bestimmt werden soll) innerhalb eines Normal-Distanzbereichs, z.B. weniger als 15 m entfernt von der Kameraeinheit 50, so werden die optischen Gruppen 51,52 so entlang der Führung 59 platziert, dass das Objekt mit einem konstanten Bildmassstab (im Speziellen für Distanzen innerhalb des Normal-Distanzbereichs mit jeweils identischem Bildmassstab) abgebildet wird. Ist das Objekt ausserhalb des Normal-Distanzbereichs und befindet sich z.B. in einer Entfernung innerhalb eines Fern-Distanzbereichs, so wird (durch entsprechende Positionierung der Baugruppen 51,52) für eine jeweilige hierfür bestimmte Entfernung zum Objekt eine (fokussierte) Abbildung für das Objekt auf der Bilderfassungseinheit 53 erzeugt, die eine grosse Bildschärfe (des Objekts) bei jeweils unterschiedlichen Bildmassstäben aufweist, d.h. das Objekt wird für unterschiedliche Distanzen zum Objekt in unterschiedlichen Grössen scharf abgebildet. Der Bildmassstab im Fern-Distanzbereich nimmt im Wesentlichen mit zunehmender Entfernung zum Objekt ab, d.h. bei grösseren Entfernungen wird die Abbildung des Objekts kleiner.

Der jeweils aktuelle Bildmassstab für eine Distanz innerhalb des den Fern-Distanzbereichs kann ausserdem für die Abbildungsauswertung, z.B. für das Erkennen und Auslesen von Bildpositionen für Referenzmerkmale, berücksichtigt werden. Insbesondere kann auch der jeweils durch die Positionierung der Optikbaugruppen 51,52 erzeugte Bildmassstab für den Normal-Distanzbereich (bei Vorliegen einer Distanz innerhalb des Normal-Distanzbereichs) ebenfalls berücksichtigt werden.

Für die variable Positionierung der Zoomgruppe 51 und der Fokussiergruppe 52 können diese Baugruppen 51,52 auf jeweils einem so genannten optischen Wagen angeordnet sein, wobei diese optische Wägen z.B. mittels eines Spindelantriebs entlang der Führung 59 verschoben werden können.

Die Zoomgruppe 51 kann eine Anzahl optischer Elemente, z.B. diffraktiver optischer Elemente wie z.B. Linsen, aufweisen durch deren Anordnung in der Zoomgruppe 51 eine vorbestimmte Beeinflussung von durch die Zoomgruppe 51 durchtretender Strahlung erfolgt, insbesondere zur Erzeugung eines Abbilds auf der Bilderfassungseinheit 53 mit einem bekannten Massstab. Ebenso kann die Fokussiergruppe 52 eine bestimmte Anzahl optischer Elemente, z.B. diffraktiver optischer Elemente wie z.B. Linsen, in definierter Anordnung aufeisen, um durch eine entsprechende Beeinflussung von Strahlung mittels der Fokussiergruppe 52 insbesondere eine scharfe Abbildung erzeugen zu können.

Figur 3 zeigt eine weitere Ausführungsform einer Kameraeinheit 50 eines erfindungsgemässen Lasertrackers mit zwei Optikbaugruppen 51,52 (mit einer Zoomgruppe 51 und einer Fokussiergruppe 52), einem Prisma 57 (zur Strahlumlenkung) und einer Bilderfassungseinheit 53.

Die Zoomgruppe 51 ist dabei für die Erfassung eines nahe gelegenen Objekts, z.B. in 1,5 m Entfernung, in einer Position 61a (bezüglich eines der Fokussiergruppe 52 zugewandten Endes der Zoomgruppe 51) positioniert. Der Doppelpfeil 61 repräsentiert zudem einen Bereich 61 für eine Verschiebung der Zoomgruppe 51 in Abhängigkeit einer aktuell (im Rahmen einer ausgelösten Messung) vorliegenden Entfernung zum zu erfassenden Objekt. Befindet sich das Objekt z.B. weiter entfernt, z.B. in ca. 15 m Entfernung, so wird die Zoomgruppe 51 gesteuert durch die Steuerungs- und Verarbeitungseinheit in der Position 61b positioniert, um eine vorbestimmte Abbildung für das Objekt oder durch eine Filterung mittels des IR-Filters 54 für die bestimmten Markierungen am Objekt auf dem CCD-Sensor 53 zu erzeugen. Auch für die entfernungsabhängige Positionierung der Fokussiergruppe 52 ist ein Bereich 62 vorgegeben, innerhalb dessen die Gruppe 52 gesteuert positioniert werden kann.

Die beiden Positionierungsbereiche 61,62 sind beispielsweise für Entfernungen zu einem Objekt innerhalb eines Normal-Bereichs bzw. Nah-Bereichs (z.B. 1,5 m bis 15 m) definiert, sodass durch die jeweils definierte Platzierung der Baugruppen 51,52 innerhalb der jeweiligen Bereiche 61,62 in der Kameraeinheit 50 eine vorbestimmte Abbildung des Objekts - mit konstantem Bildmassstab - auf dem CCD-Bildsensor 53 erreicht wird.

Dabei werden die Zoomgruppe 51 und die Fokussiergruppe 52 jeweils unabhängig voneinander gemäss einer vordefinierten Funktion innerhalb ihres jeweiligen Positionierungsbereichs 61,62 gesteuert verschoben, d.h. ein Abstand zwischen den Gruppen 51,52 ist dabei nicht fest vorgegeben, sondern kann je nach Positionierungsfunktion abhängig von der gemessenen Distanz zum Objekt variieren.

Ausserdem können die Zoomgruppe 51 und die Fokussiergruppe 52 auch ausserhalb der Bereiche 61,62 positioniert werden, falls eine Entfernung zum abzubildenden Objekt vorliegt, für die eine Positionierung der Zoomgruppe 51 und/oder der Fokussiergruppe 52 zur Bereitstellung einer (scharfen) Abbildung mit definiertem Massstab ausserhalb der jeweiligen Bereichs 61,62 festgelegt ist. Wird beispielsweise eine Distanz zu einem Objekt (z.B. zu einem taktilen Messgerät mit definiert platzierten Markern am Messgerät) gemessen, die grösser ist als eine innerhalb des Normal-Bereichs liegende Distanz, so kann die Zoomgruppe 51 zur Bereitstellung der Abbildung des Objekts mit einem bestimmten Abbildungsverhältnis bzw. Vergrösserungsfaktor aus dem Positionierungsbereich 61 heraus näher an die Frontlinsenanordnung 55 oder (bei Bedarf und abhängig von der Ausgestaltung der Fokussier- und Zoomgruppe) näher in Richtung der Fokussiergruppe 52 gefahren werden. Analoges kann für das gesteuerte Verfahren der Fokussiergruppe 52 gelten.

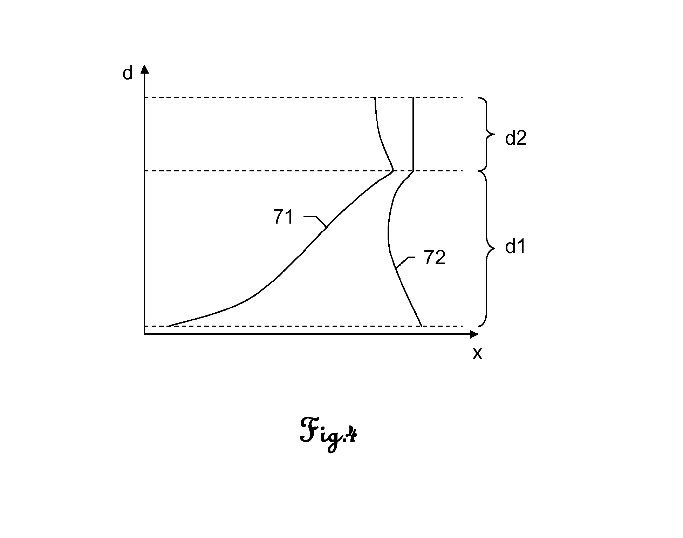

Figur 4 zeigt beispielhaft eine erfindungsgemässe Positionierungsvorschrift für eine jeweilige Positionierung von zwei Optikbaugruppen (z.B. einer Fokussiergruppe und einer Zoomgruppe) eines Lasertrackers in Abhängigkeit einer zu einem Objekt gemessene Distanz d, wobei eine Orientierung des Objekts durch ein bildliches Erfassen des Objekts oder von zumindest Teilen des Objekts bestimmt werden soll.

In Figur 4 sind zwei Optikpositionierungskurven 71,72 zu sehen, die jeweils eine Position x von Linsen bzw. Abbildungsgruppen in einer Kameraeinheit des Lasertrackers in Abhängigkeit von der Entfernung d zu einem Objekt angeben. Eine erste Optikpositionierungskurve 71 (z.B. eine Zoomgruppe-Positionierungskurve 71) bestimmt somit eine Positionierung einer ersten Optikbaugruppe (z.B. einer Zoomgruppe) an einer Position x, z.B. an einer Position x entlang einer Führung auf der die erste Optikbaugruppe verschiebbar ist, gemäss der zum Objekt gemessenen Entfernung d. Ebenso definiert eine zweite Optikpositionierungskurve 72 (z.B. eine Fokussiergruppe-Positionierungskurve 72) eine Positionierung einer zweiten Optikbaugruppe (z.B. Fokussiergruppe) an einer Position x, z.B. ebenfalls an einer Position x entlang der Führung auf der auch die zweite Baugruppe verschiebbar ist, gemäss der zum Objekt aktuell gemessenen Entfernung d.

Ausserdem ist ein erster Distanzbereich d1 und ein zweiter Distanzbereich d2 für die Positionierung der ersten und der zweiten Optikbaugruppe definiert. Die beiden Kurven 71,72 sind - wie zu sehen - ebenfalls gemäss dieser Bereichsfestlegung hybride (gemäss den beiden Distanzbereichen d1, d2 aus zwei Teilen zusammengesetzt) strukturiert.

So wird die Position der ersten Optikbaugruppe basierend auf der ersten Optikpositionierungskurve 71 innerhalb des ersten Distanzbereichs d1 mit zunehmender Entfernung d zum Objekt stetig in eine Richtung (mit ebenfalls zunehmendem x-Wert) verschoben. Bei Erreichen des zweiten Distanzbereichs d2 bzw. innerhalb dieses zweiten Bereichs d2 wird die erste Baugruppe trotz zunehmender Distanz d zum Objekt zumindest teilweise in entgegen gesetzter Richtung (abnehmender x-Wert) verschoben. Ist die erste Baugruppe als Zoomgruppe ausgebildet, so führt dies im Wesentlichen zu einer Beibehaltung eines bestimmten Bildmassstabes (des abgebildeten Objekts) auf der Bilderfassungseinheit der Teleskopeinheit für Distanzen d innerhalb des ersten Distanzbereichs d1 und zu unterschiedlichen Bildmassstäben (mit zunehmender Distanz abnehmenden Bildmassstäben) für Distanzen d innerhalb des zweiten Distanzbereichs d2.

Für die Positionierung der zweiten Optikbaugruppe ist die zweite Optikpositionierungskurve 72 ebenfalls hybride ausgestaltet. Für den ersten Distanzbereich d1 sind jeweils unterschiedliche Positionen für die zweite Baugruppe in Abhängigkeit der Distanz d definiert, wobei für den zweiten Distanzbereich d2 eine im Wesentliche feste Optikgruppenposition für Distanzen in diesem Bereich d2 definiert ist. Ist diese zweite Optikbaugruppe als Fokussiergruppe ausgebildet, so wird dadurch sowohl für Abbildungen im ersten Distanzbereich d1 (z.B. Normal-Bereich) als auch für Abbildung im zweiten Distanzbereich d2 jeweils eine im Wesentlichen scharfe Abbildung des Objekts auf der Bilderfassungseinheit erzeugt.

Gemeinsam betrachtet stellen die Positionierungen des Systems aus der ersten und der zweiten Optikbaugruppe gemäss des aktuell vorliegenden Abstands d zu einem Objekt basierend auf den beiden Optikpositionierungskurven 71,72 eine für den jeweiligen Distanzbereich d1, d2 vorgesehen Vergrösserung für eine Abbildung des Objekts bereit. Zudem wird dadurch jeweils eine Abbildung mit einer grossen Bildschärfe bereitgestellt.

Durch die hier vorliegende Definition der Distanzbereiche d1, d2 ist ferner ein Mindestmessabstand (Entfernungen zum Objekt < d1) für den Lasertracker berücksichtigt, der für Messungen mit dem Tracker je nah Ausführung des Trackers mindestens vorliegen muss.

Zusätzlich können weitere Distanzbereiche (hier nicht gezeigt) definiert sein, die z.B. Distanzen abbilden, die grösser als diejenigen durch die beiden Bereiche d1, d2 abgedeckten Distanzen sind. Die beiden Kurven 71,72 können für diese weiteren Bereiche ebenfalls entsprechend definiert sein, d.h. die Kurven 71,72 können analog weitere Bereiche (dₙ) mit weiteren Positionierungsbedingungen aufweisen. Alternativ oder zusätzlich können auch weitere Positionierungskurven für solche Bereiche hinterlegt sein.

Es versteht sich, dass diese dargestellten Figuren nur mögliche Ausführungsbeispiele schematisch darstellen. Die verschiedenen Ansätze können erfindungsgemäss ebenso miteinander sowie mit Verfahren zur Abbildung von Objekten bzw. mit Verfahren zur Orientierungsbestimmung von Objekten und mit gattungsgemässen Messgeräten, insbesondere Lasertrackern, des Stands der Technik kombiniert werden.

## Patentansprüche

1. Lasertracker (10,11) zur Positions- und/oder Orientierungsbestimmung eines in definierter räumlicher Beziehung angebrachte Referenzmerkmale (82) aufweisenden Messhilfsobjekts (80) und insbesondere zur fortlaufenden Verfolgung des Messhilfsobjekts (80), aufweisend
● eine eine Stehachse (41) definierende Basis (40),
● eine relativ zur Basis (40) um die Stehachse (41) motorisiert schwenkbare Stütze (30),
● eine relativ zur Stütze (30) um eine Kippachse motorisiert drehbare Schwenkeinheit (15,20) mit zumindest zwei Optikbaugruppen (51,52) und einer Bilderfassungseinheit (53), wobei
□ die Optikbaugruppen (51,52) entlang einer optischen Achse (60) der Schwenkeinheit (15,20) verschiebbar sind und
□ durch eine jeweilige aktuelle Positionierung der Optikbaugruppen (51,52) ein Vergrösserungsfaktor für eine Erfassung eines Bildes mittels der Bilderfassungseinheit (53) definiert ist,
● eine Strahlquelle zur Emission eines Laserstrahls (17,21),
● eine Entfernungsmesseinheit (22) zur Distanzmessung zum Messhilfsobjekt (80) vermittels des Laserstrahls (17,21),
● eine Winkelmessfunktionalität zur Bestimmung einer Emissionsrichtung des Laserstrahls (17,21) relativ zur Basis (40),
● eine Steuerungs- und Verarbeitungseinheit mit einer Objektabbildungsfunktionalität, bei deren Ausführung ein gesteuertes Positionieren der
Optikbaugruppen (51,52) in Abhängigkeit von einer aktuell ausgelösten Messung zum Messhilfsobjekt (80) derart erfolgt, insbesondere fortlaufend, dass eine Abbildung für das Messhilfsobjekt (80) mit einem bestimmten Bildmassstab für eine durch die ausgelöste Messung bestimmte Distanz zum Messhilfsobjekt (80) auf der Bilderfassungseinheit (53) bereitgestellt wird, und
● eine Bildverarbeitungseinheit zur Abbildungsauswertung der abgebildeten Referenzmerkmale (82), sodass daraus die räumliche Orientierung des Messhilfsobjekts (80) bestimmbar ist,
**dadurch gekennzeichnet, dass**
● durch die Objektabbildungsfunktionalität zumindest ein Normal-Distanzbereich (d1) und ein Fern-Distanzbereich (d2) für eine Distanz zum Messhilfsobjekt (80) definiert sind und bei Ausführung der Objektabbildungsfunktionalität gesteuert durch die Steuerungs- und Verarbeitungseinheit der Vergrösserungsfaktor in Abhängigkeit von der durch die ausgelöste Messung bestimmten Distanz zum Messhilfsobjekt (80) derart eingestellt wird, dass
□ für Distanzen innerhalb des Normal-Distanzbereichs (d1) für die Abbildung ein im Wesentlichen konstanter Normal-Bildmassstab bereitgestellt wird und
□ für jede Distanz innerhalb des Fern-Distanzbereichs (d2) für die Abbildung ein in Abhängigkeit von der jeweiligen Distanz variabler Fern-Bildmassstab bereitgestellt wird, wobei der Fern-Bildmassstab mit zunehmender Distanz zum Messhilfsobjekt (80) kleiner wird, und
● bei Ausführung der Abbildungsauswertung bei Vorliegen der bestimmten Distanz innerhalb des Fern-Distanzbereichs (d2) der jeweils für die bestimmte Distanz bereitgestellte Fern-Bildmassstab berücksichtigt wird.

2. Lasertracker (10,11) nach Anspruch 1,
**dadurch gekennzeichnet, dass**
der Normal-Bildmassstab für die Distanzen innerhalb des Normal-Distanzbereichs (d1) derart bereitgestellt wird, dass ein Bilderfassungsbereich der Bilderfassungseinheit (53) hinsichtlich einer Verteilung der abzubildenden Referenzmerkmale (82) optimal ausgefüllt ist und/oder der Normal-Bildmassstab für die Distanzen innerhalb des Normal-Distanzbereichs (d1) identisch ist.

3. Lasertracker (10,11) nach Anspruch 1 oder 2,
**dadurch gekennzeichnet, dass**
zumindest zwei Optikpositionierungskurven (71,72) für die Positionierung der zumindest zwei
Optikbaugruppen (51,52) hinterlegt sind, wobei die zumindest zwei Optikpositionierungskurven (71,72) hybride strukturiert sind und eine Positionierung der zumindest zwei Optikbaugruppen (51,52) für die Distanzen innerhalb des Normal-Distanzbereichs (d1) und/oder des Fern-Distanzbereichs (d2) angeben.

4. Lasertracker (10,11) nach einem der Ansprüche 1 bis 3, **dadurch gekennzeichnet, dass**
eine Fokussiergruppe-Positionierungskurve (72) zur Positionierung einer Fokussiergruppe (52) und eine Zoomgruppe-Positionierungskurve (71) zur Positionierung einer Zoomgruppe (51) in Abhängigkeit von der bestimmten Distanz zum Messhilfsobjekt (80) hinterlegt sind, wobei die Fokussiergruppe (52) eine erste der zumindest zwei Optikbaugruppen und die Zoomgruppe (51) eine zweite der zumindest zwei Optikbaugruppen verkörpert,
insbesondere wobei die Fokussiergruppe-Positionierungskurve (72) und die Zoomgruppe-Positionierungskurve (71) die Positionierung der Fokussiergruppe (52) und der Zoomgruppe (51) für die Distanzen innerhalb des Normal-Distanzbereichs (d1) und/oder des Fern-Distanzbereichs (d2) angeben, insbesondere wobei im Wesentlichen vermittels der Positionierung der Fokussiergruppe (52) eine Fokussierung der Abbildung und vermittels der Positionierung der Zoomgruppe (51) eine Vergrösserung der Abbildung einstellbar ist.

5. Lasertracker (10,11) nach einem der Ansprüche 1 bis 4, **dadurch gekennzeichnet, dass**
die Steuerungs- und Verarbeitungseinheit eine Orientierungsbestimmungsfunktionalität aufweist, bei deren Ausführung die räumliche Orientierung des Messhilfsobjekts (80) basierend auf der Abbildungsauswertung mittels Bildverarbeitung abgeleitet wird, insbesondere mittels Bestimmen von Bildpositionen für die abgebildeten
Referenzmerkmale (82) durch Schwerpunktberechnung und/oder mittels Kantenextraktion und/oder mittels Helligkeits- und/oder Kontrastanalyse.

6. Lasertracker (10,11) nach einem der Ansprüche 1 bis 5, **dadurch gekennzeichnet, dass**
die Schwenkeinheit (15,20) eine Filtereinheit (54) zur optischen Filterung von einfallender Strahlung aufweist, insbesondere ein Infrarotfilter zur derartigen Filterung, dass Licht innerhalb eines definierten infraroten Wellenlängenbereichs mittels der Filtereinheit transmittiert, absorbiert oder reflektiert wird und gegebenenfalls auf die Bilderfassungseinheit (53) trifft.

7. Lasertracker (10,11) nach Anspruch 6,
**dadurch gekennzeichnet, dass**
bei Ausführung der Objektabbildungsfunktionalität eine Anzahl von als die Referenzmerkmale vorgesehenen Orientierungsmarkierungen (82), die durch die Filtereinheit (54) transmittierbare Strahlung emittieren und/oder reflektieren, auf der Bilderfassungseinheit (53) bereitgestellt werden, insbesondere wobei ein Bild der bereitgestellten Orientierungsmarkierungen (82) durch die Bilderfassungseinheit (53) erfasst wird und die räumliche Orientierung des Messhilfsobjekts (80) aus durch die Abbildungsauswertung bestimmten Bildpositionen für die Orientierungsmarkierungen (82) abgeleitet wird.

8. Lasertracker (10,11) nach einem der Ansprüche 1 bis 7, **dadurch gekennzeichnet, dass**
durch die Objektabbildungsfunktionalität zumindest ein weiterer Distanzbereich mit einem Positionierungskriterium zur Positionierung der zumindest zwei Optikbaugruppen (51,52) in Abhängigkeit von einer Distanz zum Messhilfsobjekt (80), die innerhalb des weiteren Distanzbereichs liegt, definiert ist, insbesondere wobei das Positionierungskriterium repräsentiert wird durch eine weitere Optikpositionierungskurven.

9. Lasertracker (10,11) nach einem der Ansprüche 1 bis 8, **dadurch gekennzeichnet, dass**
die zumindest zwei Optikbaugruppen (51,52) jeweils mittels eines optischen Wagens entlang der optischen Achse (60) verschiebbar und positionierbar sind, und/oder
die Schwenkeinheit (15,20) einen Spindelantrieb zur Verschiebung und Positionierung der zumindest zwei Optikbaugruppen (51,52) aufweist und/oder die Schwenkeinheit (15,20) eine in einen durch die mindestens zwei Optikbaugruppen (51,52) definierten optischen Strahlengang einschwenkbare Strahlungsblockiereinheit (58) zur Verhinderung eines Strahlungsdurchtritts zur Bilderfassungseinheit (53) aufweist, insbesondere einen Shutter zur Blockierung des Strahlengangs, und/oder die
Bilderfassungseinheit (53) ausgebildet ist als CCD- oder CMOS-Kamera.

10. Lasertracker (10,11) nach einem der Ansprüche 1 bis 9, **dadurch gekennzeichnet, dass**
der Lasertracker (10,11) eine zumindest die Entfernungsmesseinheit (22), insbesondere die Strahlquelle, aufweisende und um die Kippachse relativ Stütze (30) motorisiert schwenkbare
Strahllenkeinheit (20) aufweist, wobei
● die Schwenkeinheit verkörpert ist durch die Strahllenkeinheit (20) und durch eine Ausrichtung der Strahllenkeinheit (20) eine Bilderfassungsrichtung definiert ist und
● die Strahllenkeinheit (20) zur Emission des Laserstrahls (21) in Emissionsrichtung und zum Empfang von zumindest einem Teil des am Messhilfsobjekt (80)reflektierten Laserstrahls ausgebildet ist.

11. Objekterfassungsverfahren zum Orientierungsbestimmen eines in definierter räumlicher Beziehung angebrachte Referenzmerkmale (82) aufweisenden
Messhilfsobjekts (80) für und mit einem Lasertracker (10,11) mit
● einer eine Stehachse (41) definierenden Basis (40),
● einer relativ zur Basis (40) um die Stehachse (41) motorisiert schwenkbaren Stütze (30),
● einer relativ zur Stütze (30) um eine Kippachse motorisiert drehbare Schwenkeinheit (15,20) zum Erfassen eines Bildes des Messhilfsobjekts (80),
wobei im Rahmen des Objekterfassungsverfahrens erfolgen ● ein Distanzmessen zum Bestimmen einer aktuellen Distanz zum Messhilfsobjekt (80) vermittels eines Laserstrahls (17,21),
● ein Einstellen, insbesondere fortlaufend, eines Vergrösserungsfaktors in Abhängigkeit der aktuellen Distanz zum Messhilfsobjekt (80) derart, dass eine Abbildung für das Messhilfsobjekt (80) mit einem für die aktuelle Distanz bestimmten Bildmassstab für das Erfassen des Bildes bereitgestellt wird, und
● Erfassen des Bildes,
**dadurch gekennzeichnet, dass**
● zumindest ein Normal-Distanzbereich (d1) und ein Fern-Distanzbereich (d2) definiert sind und das Einstellen des Vergrösserungsfaktors in Abhängigkeit von der aktuellen Distanz zum Messhilfsobjekt (80) derart erfolgt, dass
□ für Distanzen innerhalb des Normal-Distanzbereichs (d1) für die Abbildung ein im Wesentlichen konstanter Normal-Bildmassstab bereitgestellt wird und
□ für jede Distanz innerhalb des Fern-Distanzbereichs (d2) für die Abbildung ein in Abhängigkeit von der jeweiligen Distanz variabler Fern-Bildmassstab bereitgestellt wird, wobei der Fern-Bildmassstab mit zunehmender Distanz zum Messhilfsobjekt (80) kleiner wird, und
● der jeweils für die bestimmte Distanz bereitgestellte Fern-Bildmassstab bei einem auf Basis der Abbildung und mittels Bildverarbeitung erfolgenden Abbildungsauswerten hinsichtlich der Referenzmerkmale (82) zum Orientierungsbestimmen berücksichtigt wird.

12. Objekterfassungsverfahren nach Anspruch 11,
**dadurch gekennzeichnet, dass**
das Einstellen des Vergrösserungsfaktors basierend auf hinterlegten Optikpositionierungskurven (71,72) erfolgt, insbesondere wobei eine Fokussiergruppe-Positionierungskurve (72) eine Fokussierstellung für eine Fokussiergruppe (52) und eine Zoomgruppe-Positionierungskurve (72) eine Vergrösserungsstellung für eine Zoomgruppe (52) in Abhängigkeit von der Distanz zum Messhilfsobjekt (80) angeben, und/oder der Normal-Bildmassstab für die Distanzen innerhalb des Normal-Distanzbereichs (d1) derart bereitgestellt wird, dass das Bild bezüglich der Verteilung der abgebildeten Referenzmerkmale im Bild ausgefüllt ist und/oder der Normal-Bildmassstab identisch ist.

13. Objekterfassungsverfahren nach Anspruche 11 oder 12, **dadurch gekennzeichnet, dass**
zumindest ein weiterer Distanzbereich mit einem Positionierungskriterium zur Einstellung des Vergrösserungsfaktors in Abhängigkeit von einer jeweiligen Distanz zum Messhilfsobjekt (80), die innerhalb des weiteren Distanzbereichs liegt, definiert ist, insbesondere wobei das Positionierungskriterium repräsentiert wird durch eine weitere Optikpositionierungskurve.

14. Objekterfassungsverfahren nach einem der Ansprüche 11 bis 13,
**dadurch gekennzeichnet, dass**
ein Filtern von einfallender Strahlung derart erfolgt, dass Strahlung innerhalb eines definierten Wellenlängenbereichs in dem Bild erfasst wird und insbesondere eine räumliche Orientierung des Messhilfsobjekts (80) aus der im Bild erfassten gefilterten Strahlung abgeleitet wird, insbesondere aus mittels des Abbildungsauswertens ermittelten Bildpositionen, insbesondere wobei
● infrarotes Licht derart gefiltert wird, dass Licht innerhalb eines definierten infraroten Bereichs transmittiert, absorbiert oder reflektiert wird, und/oder
● das Messhilfsobjekt (80) Orientierungsmarkierungen (82) aufweist, welche Strahlung innerhalb des definierten Wellenlängenbereichs emittieren und/oder reflektieren.

15. Computerprogrammprodukt, das auf einem maschinenlesbaren Träger gespeichert ist, zur Steuerung
● des Entfernungsmessens,
● des Einstellens des Vergrösserungsfaktors und
● des Erfassens des Bildes, des Objekterfassungsverfahrens nach einem der Ansprüche 11 bis 14, insbesondere wenn das Computerprogrammprodukt auf einer Steuerungs- und Verarbeitungseinheit eines Lasertrackers (10,11) nach einem der Ansprüche 1 bis 10 ausgeführt wird.
